# EUROPEAN PATENT APPLICATION

(11) **EP 4 084 482 A1**
(43) Date of publication of application: **02.11.2022**
(21) Application number: 21741960.5
(22) Date of filing: 15.01.2021
(51) Int. Cl.: H04N 21/2187

(54) **STREAM PULL METHOD AND DEVICE FOR LIVE STREAM**

(30) Priority: 17.01.2020 CN 202010051613
(71) Applicant: Beijing Dajia Internet Information Technology Co., Ltd., Beijing 100085 (CN)
(72) Inventor: CHENG, Yuan, Beijing 100085 (CN); LUO, Zhe, Beijing 100085 (CN); CAO, Nan, Beijing 100085 (CN); GUO, Junjian, Beijing 100085 (CN); YU, Bing, Beijing 100085 (CN)
(74) Representative: Vossius & Partner Patentanwälte Rechtsanwälte mbB
(86) International application number: PCT/CN2021/072280
(87) International publication number: WO 2021/143881

(57) **Abstract**

The present disclosure relates to a stream pull method and apparatus for live streams, and an electronic device and a storage medium. The method comprises: receiving a third-party business stream pull request, which is sent by a third-party business client, for a target live stream; determining, according to the third-party business stream pull request, a source business domain name and a live stream name of the target live stream; searching local live streams for the target live stream according to the source business domain name and the live stream name; and forwarding the pulled target live stream to the third-party business client when the target live stream is present in the local live streams.

## Description

### CROSS-REFERENCE TO RELATED APPLICATIONS

The present application claims priority to Chinese Patent Application No. 202010051613.3 filed on January 17, 2020, the contents of which are incorporated herein by reference in its entirety as part of this application.

### TECHNICAL FIELD

The present disclosure relates to the field of computer technology, and in particular, to a method and apparatus for pulling a live stream, an electronic device, and a storage medium.

### BACKGROUND

With the development of network technology, more and more users watch network live streaming online. In addition to the existing live streaming platforms, more and more third-party business platforms have also joined the live streaming business. When a user watches network live streaming through a client of the third-party business platform, he or she usually needs to save the live stream generated by the existing live streaming platform to a source station of the third-party business platform, and then the client of the third-party business platform pulls the live stream from the source station of the third-party business platform.

### SUMMARY

The present disclosure provides a method, apparatus, and system for pulling a live stream. The technical solutions of the present disclosure are as follows.

According to a first aspect of the embodiments of the present disclosure, there is provided a method of pulling a live stream, applied to a content delivery network, including: receiving a third-party business stream pull request for a target live stream from a third-party business client; determining a source business domain name and a live stream name of the target live stream based on the third-party business stream pull request; searching one or more local live streams for the target live stream based on the source business domain name and the live stream name, where the one or more local live streams are at a first node of the content delivery network; and forwarding, in response to a presence of the target live stream in the one or more local live streams, the target live stream in the one or more local live streams to the third-party business client.

According to a second aspect of the embodiments of the present disclosure, there is provided method of pulling a live stream, applied to a third-party business client, including: obtaining a source business domain name and a live stream name of a target live stream; generating a third-party business stream pull request based on the source business domain name and the live stream name; sending the third-party business stream pull request to a first node in a content delivery network, causing the first node to search one or more local live streams for the target live stream based on the source business domain name and the live stream name in the third-party business stream pull request, and to forward the target live stream in the one or more local live streams to the third-party business client in response to a presence of the target live stream in the one or more local live streams; and receiving the target live stream forwarded by the first node.

According to a third aspect of the embodiments of the present disclosure, there is provided apparatus for pulling a live stream, including: a request acquisition unit configured to receive a third-party business stream request for a target live stream from a third-party business client; a domain name acquisition unit configured to determine a source business domain name and a live stream name of the target live stream based on the third-party business stream pull request; a live stream search unit configured to search one or more local live streams for the target live stream based on the source business domain name and the live stream name, where the one or more local live streams are at a first node of the content delivery network; and a first live stream forwarding unit configured to forward, in response to a presence of the target live stream in the one or more local live streams, the target live stream in the one or more local live streams to the third-party business client.

According to a fourth aspect of the embodiments of the present disclosure, there is provided an apparatus for pulling a live stream, including: an information acquisition unit configured to obtain a source business domain name and a live stream name of a target live stream; a request generation unit configured to generate a third-party business stream pull request based on the source business domain name and the live stream name; and a request sending unit configured to sending the third-party business stream pull request to a first node in a content delivery network, causing the first node to search one or more local live streams for the target live stream based on the source business domain name and the live stream name in the third-party domain name pull request, and to forward the target live stream in the one or more local live streams to the third-party business client in response to a presence of the target live stream in the one or more local live streams; and a live stream acquisition unit configured to receive the target live stream forwarded by the first node.

According to a fifth aspect of the embodiments of the present disclosure, there is provided an electronic device, including: a processor; and a memory storing instructions executable by the processor; where the processor is configured to execute the instructions to implement following steps: receiving a third-party business stream pull request for a target live stream from a third-party business client; determining a source business domain name and a live stream name of the target live stream based on the third-party business stream pull request; searching one or more local live streams for the target live stream based on the source business domain name and the live stream name; and forwarding, in response to a presence of the target live stream in the one or more local live streams, the target live stream in the one or more local live streams to the third-party business client.

According to a sixth aspect of the embodiments of the present disclosure, there is provided an electronic device, including: a processor; and a memory storing instructions executable by the processor; where the processor is configured to execute instructions to implement following steps: obtaining a source business domain name and a live stream name of a target live stream; generating a third-party business stream pull request based on the source business domain name and the live stream name; sending the third-party business stream pull request to a first node in a content delivery network, causing the first node to search one or more local live streams for the target live stream based on the source business domain name and the live stream name in the third-party business stream pull request, and to forward the target live stream in the one or more local live streams to the third-party business client in response to a presence of the target live stream in the one or more local live streams; and receiving the target live stream forwarded by the first node.

According to a seventh aspect of the embodiments of the present disclosure, there is provided a storage medium, in response to instructions in the storage medium executed by a processor of an electronic device, causing the electronic device to perform following steps: receiving a third-party business stream pull request for a target live stream from a third-party business client; determining a source business domain name and a live stream name of the target live stream based on the third-party business stream pull request; searching one or more local live streams for the target live stream based on the source business domain name and the live stream name; and forwarding, in response to a presence of the target live stream in the one or more local live streams, the target live stream in the one or more local live streams to the third-party business client.

According to an eighth aspect of the embodiments of the present disclosure, there is provided a storage medium, in response to instructions in the storage medium executed by a processor of an electronic device, causing the electronic device to perform following steps: obtaining a source business domain name and a live stream name of a target live stream; generating a third-party business stream pull request based on the source business domain name and the live stream name; sending the third-party business stream pull request to a first node in a content delivery network, causing the first node to search one or more local live streams for the target live stream based on the source business domain name and the live stream name in the third-party business stream pull request, and to forward the target live stream in the one or more local live streams to the third-party business client in response to a presence of the target live stream in the one or more local live streams; and receiving the target live stream forwarded by the first node.

It should be understood that the foregoing general description and the following detailed descriptions are exemplary and explanatory only and do not limit the present disclosure.

### BRIEF DESCRIPTION OF THE DRAWINGS

The accompanying drawings herein, incorporated into and form part of the specification, illustrate embodiments consistent with the present disclosure, and are used to explain the principles of the present disclosure in conjunction with the specification and do not constitute an undue limitation of the present disclosure.
FIG. 1a is a schematic diagram of the data flow direction of a live stream in a content delivery network illustrated according to an exemplary embodiment.
FIG. 1b is a diagram of an application environment of a method for pulling a live stream illustrated according to an exemplary embodiment.
FIG. 2 is a flowchart of a method of pulling a live stream illustrated according to an exemplary embodiment.
FIG. 3 is a flowchart of a method of pulling a live stream illustrated according to another exemplary embodiment.
FIG. 4 is a timing diagram of a method for pulling a live stream illustrated according to an exemplary embodiment.
FIG. 5 is a block diagram of an apparatus for pulling a live stream illustrated according to an exemplary embodiment.
FIG. 6 is a block diagram of an apparatus for pulling a live stream illustrated according to another exemplary embodiment.
FIG. 7 is a block diagram of an electronic device illustrated according to an exemplary embodiment.
FIG. 8 is a block diagram of an edge node illustrated according to an exemplary embodiment.

### DETAILED DESCRIPTION

In order to make those ordinary skilled in the art better understand the technical solutions of the present disclosure, the technical solutions in the embodiments of the present disclosure will be clearly and completely described below with reference to the accompanying drawings.

It should be noted that the terms "first," "second," etc. in the specification and claims of the present disclosure and the accompanying drawings above are used to distinguish similar objects and not necessarily used to describe a particular order or sequence. It should be understood that the term so used may be interchanged, where appropriate, so that embodiments of the present disclosure described herein can be implemented in an order other than those illustrated or described herein. The embodiments described in the following exemplary embodiments are not intended to represent all embodiments consistent with the present disclosure. Rather, they are only examples of devices and methods that are consistent with some aspects of the present disclosure, as detailed in the appended claims.

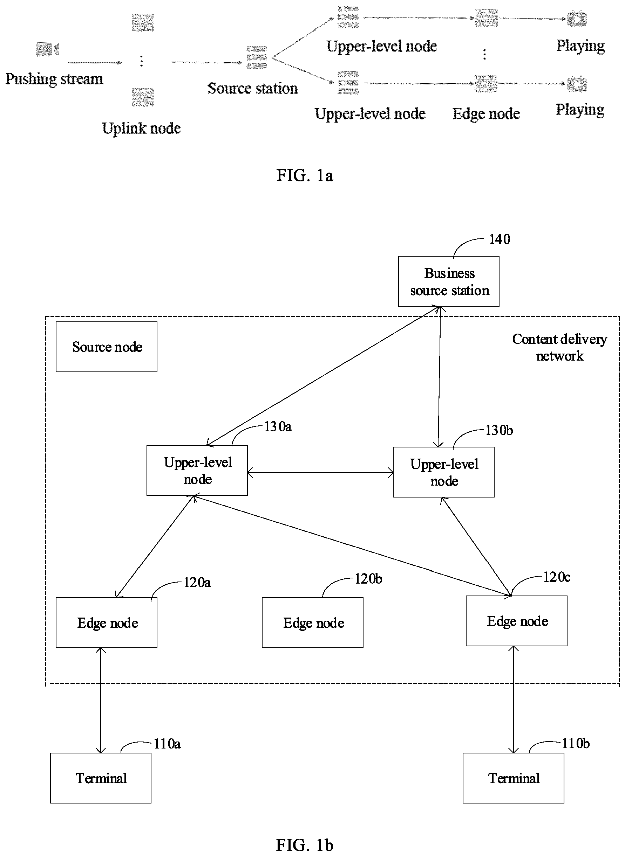

Content Delivery Network (CDN), a layer of virtual network on the basis of the existing Internet formed by placing node servers in various parts of the network, enables the CDN system to redirect user requests to the closest service node according to the comprehensive information such as network traffic and the connection and load of each node, as well as the distance to the user and the response time in real time, so that users can get the required content nearby to solve the network congestion, improve the response speed and hit rate of user access. The CDN system is applicable to site acceleration, on-demand, live streaming and other scenarios, and when it is applied to the live streaming scenario, the data flow direction of the live stream is shown in FIG. 1a. In FIG. 1a, a user who initiates live streaming records a live video to generates a live stream; the live stream is sent to the live streaming source station through the uplink node; and subsequently, a user who wants to watch the live streaming initiates a live stream viewing request to an edge node of the content delivery network through the terminal device to pull the live stream from the live streaming source station by sourcing back to the live streaming source station through the content delivery network level by level.

The method for pulling a live stream provided by the present disclosure may be applied in an application environment as shown in FIG. 1b, where the terminal may be connected to a first node closest thereto via a network. The first node is a current node of a local live stream, e.g., an edge node of the content delivery network. For example, terminal 110a may be connected to its closest edge node 120a, and terminal 110b may be connected to its closest edge node 120b. Taking terminal 110a as an example, terminal 110a has a third-party business client installed on it, and terminal 110a sends a third-party business stream pull request to edge node 120a via the third-party business client. Edge node 120a, after obtaining the third-party business stream pull request, determines a source business domain name and a live stream name of a target live stream based on the third-party business stream pull request, and search one or more local live streams for the target live stream based on the source business domain name and live stream name. When the target live stream exists in the local live stream(s), edge node 120a directly forwards the target live stream in the local live stream(s) to terminal 110a where the third-party business client is located, causing terminal 110a to play the target live stream through the third-party business client, enabling the reuse of edge node 120a in the content delivery network to pull the target live stream to terminal 110a where the third-party business client is located. Therefore, the original back-to-source link of the target live stream is directly reused in the content delivery network so as to reuse the popularity of the live stream to the greatest extent, reduce the back-to-source and the time for pulling the live stream, and improve the pulling efficiency. The terminal specifically can be a desktop terminal or a mobile terminal, and the mobile terminal specifically can be at least one of a cell phone, a tablet computer, a laptop computer, etc. The edge node can be implemented with an independent server or a server cluster composed of multiple servers.

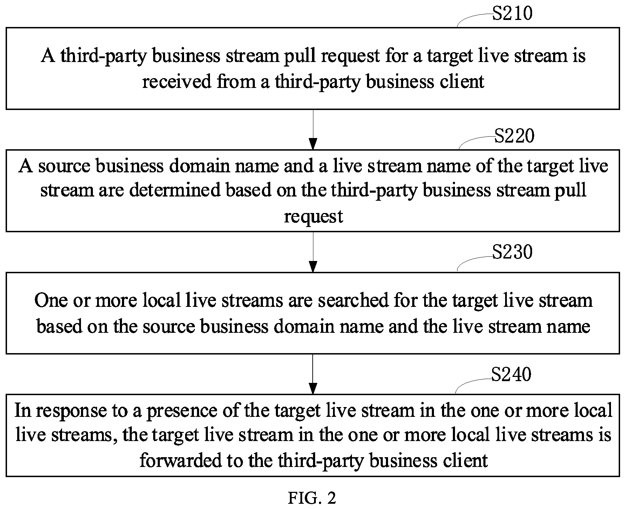

FIG. 2 is a flowchart of a method for pulling a live stream illustrated according to an exemplary embodiment. As shown in FIG. 2, the method for pulling the live stream, applied in an edge node, includes the following steps.

In step S210, a third-party business stream pull request for a target live stream is received from a third-party business client.

The third-party business client refers to the client of the business platform other than the source business platform that produces the live stream. The third-party business stream pull request refers to the request initiated by the third-party business client to pull the target live stream, which may be generated based on the pull-stream address of the third-party business client to pull the target live stream.

The initiator of the live streaming initiates the live streaming in the source business platform, and the viewer who wants to watch the live streaming watches the live streaming of the initiator through the third-party business platform. In this case, the viewer initiates the third-party business stream pull request to the edge node in the content delivery network through the third-party business client, and the edge node, after receiving the third-party business stream pull request, pulls the live stream from the live streaming source station of the source business platform and returns the pulled live stream to the third-party business client, enabling the viewer to watch the corresponding live streaming. In some embodiments, the third-party business client generates the third-party business stream pull request based on the source business domain name and live stream name of the target live stream, and sends the third-party business stream pull request to a server corresponding to an edge node of the content delivery network, and the server of the edge node receives the third-party business stream pull request sent by the third-party business client.

In step S220, a source business domain name and a live stream name of the target live stream are determined based on the third-party business stream pull request.

The source business domain name is the domain name of the source business platform that produces the target live stream. The live stream name is the only unique identifier of the live stream. After receiving the third-party business stream pull request, the server of the edge node parses the third-party business stream pull request, and obtains the domain name of the source business platform where the target live stream is located and the live stream name of the target live stream from the third-party business stream pull request.

In one embodiment, the third-party business stream pull request includes a third-party business domain name, an agreed path, a live stream name, authentication information, and a source business domain name. The third-party business domain name is the domain name where the third-party platform for the new live streaming business is located. The agreed path is a static identifier agreed between the business party and the CDN vendor.

With respect to the target live stream, the initiator initiates the live streaming in the source business platform, and the live stream thereof is pushed to the live streaming source station of the source business platform, and the viewer of the third-party business platform wishes to pull the live stream from the live streaming source station of the source business platform, at which time the third-party business client adds a shared business party parameter to the stream pull request, which is marked as "shareHost", and the parameter value is the domain name of the source business platform where the target live stream is located.

In some embodiments, the third-party business stream pull request may be specified as: http://third-party business domain name/agreed path/{live stream name}?{authentication information} &shareHost = {source business domain name}.

In step S230, one or more local live streams are searched for the target live stream based on the source business domain name and the live stream name.

After the edge node obtains the source business domain name and the live stream name of the target live stream, the edge node searches the local live stream(s) for the live stream with the same live stream name under the source service domain.

The local live stream of the edge node is a live stream that has been pulled in the past. In some embodiments, the edge node, after obtaining the source business domain name as well as the live stream name of the target live stream, compares the source business domain name as well as the live stream name of the target live stream, respectively, with the business domain name as well as the live stream name of the local live stream, and searches the local live stream(s) for the live stream whose business domain name is consistent with the source business domain name of the target live stream and whose live stream name is consistent with the live stream name of the target live stream.

In step S240, in response to a presence of the target live stream in the one or more local live streams, the target live stream in the one or more local live streams is forwarded to the third-party business client.

When the edge node found a live stream with the same source service domain name and the same live stream name as the target live stream from the local live stream(s), the edge node forwards the live stream to the third-party business client.

In some embodiments, the edge node compares the source business domain name and the live stream name of the target live stream with the business domain name and the live stream name of the local live stream, respectively, and when it found a live stream in the local live stream(s) whose business domain name is consistent with the source business domain name of the target live stream and whose live stream name is consistent with the live stream name of the target live stream, the live stream is determined as the target live stream, and the edge node forwards the target live stream to the third-party business client.

For example, it is assumed that the source business platform is Kuaishou live streaming platform, whose domain name (i.e., source business domain name) is represented as domainB, and the third-party business platform is AcFun, whose domain name (i.e., third-party business domain name) is represented as domainA. In this case, a live stream "kwai" exists in the live streaming source station of the Kuaishou live streaming platform, and for any user of the Kuaishou live streaming platform who wants to watch the live stream "kwai", the user can send a source business stream pull request through the client of Kuaishou platform to the edge node in the content delivery network, and the edge node can source back to the live streaming source station level by level according to the source business stream pull request, and pull the live stream "kwai". The source business stream pull request is: http://domainB/app/kwai.flv?timestamp&signature. After the edge node pulls and obtains the live stream "kwai", it forwards the live stream "kwai" to the client of Kuaishou platform for users to watch.

In this case, when any user of the third-party business platform AcFun of the new live streaming business wants to watch the live stream "kwai" in Kuaishou live streaming platform, the user triggers the viewing event for the live stream "kwai" in the third-party business client, causing the third-party business client to generate a third-party business stream pull request based on the source business domain name and the live stream name of the live stream "kwai", and to send the third-party business stream pull request to the edge node in the content delivery network, where the third-party business pull request is: http://domianA/app/kwai.flv?timestamp&signature&shareHost=domainB. After receiving the request from the third-party business client, the edge node parses the parameters of the third-party business stream pull request, obtains the source business domain name and the live stream name of the live stream "kwai", and since the edge node has previously pulled the live stream "kwai" once, i.e., the live stream "kwai" under the corresponding domain name of Kuaishou live streaming platform already exists in the local live stream(s) of the edge node, the edge node directly reuses the live stream "kwai" and forwards the live stream "kwai" to the third-party business client for users to watch. It can be understood that reusing the edge node to pull the live stream "kwai" to the third-party business client in the content delivery network allows the content delivery network to reuse the popularity of the live stream to the greatest extent and reduce the back-to-source, providing for the user low latency, more fluid viewing experience.

In the above method for pulling the live stream, the third-party business stream pull request for the target live stream is received from the third-party business client, the source business domain name and the live stream name of the target live stream are determined according to the third-party business stream pull request, the local live stream(s) is searched for the target live stream according to the source business domain name and the live stream name, and in response to the presence of the target live stream in the local live stream(s), the pulled target live stream is forwarded to the third-party business client, so that when a new live streaming business is provided in the third-party business client, there is no need to save the live stream produced by the source business platform to the source station of the third-party business platform, but to directly obtain the live stream pulled by the edge node of the content delivery network from the live streaming source station of the source business platform, and share the live stream with the source business platform through the content delivery network, without producing the live stream, reducing the time for pulling the live stream and improving the efficiency of pulling streams.

In one embodiment, after the step of searching the local live stream(s) for the target live stream based on the source business domain name and the live stream name, the method further includes: generating, in response to an absence of the target live stream in the one or more local live streams, a source business stream pull request based on the source business domain name and the live stream name; pulling the target live stream from an upper-level node by sourcing back to the upper-level node based on the source business stream pull request, causing the upper-level node to forward the target live stream; and receiving the target live stream forwarded by the upper-level node and forwarding the target live stream to the third-party business client.

The source business stream pull request is a request from the user of the source business platform to pull a live stream from the live streaming source station.

In some embodiments, when the target live stream does not exist in the local live stream(s) of the edge node, the edge node can generate a source business stream pull request based on the source business domain name and the live stream name in the third-party business stream pull request, and then source back to the upper-level node based on the source business stream pull request. After the upper-level node receives the source business stream pull request, the upper-level node can parse the source business stream pull request to obtain the source business domain name and live stream name of the target live stream, and then search the local live stream(s) of the upper-level node for the live stream whose source business domain name is consistent with the source business domain name of the target live stream, and whose live stream name is consistent with the live stream name of the target live stream. The upper-level node can also continue to source back to the live streaming source station level by level according to the source business stream pull request, and pull the target live stream from the live streaming source station of the source business platform. After the upper-level node obtains the target live stream, the upper-level node forwards the target live stream to the edge node, and then the edge node forwards the target live stream to the third-party business client for playback.

In the embodiments of the present disclosure, when the local live stream(s) of the edge node has no target live stream, the target live stream can be pulled from the upper-level node through the edge node in the content delivery network back to the source to the upper-level node, to achieve direct access to the target live stream of the live streaming source station of the source business platform pulled by the upper-level node, or to pull the target live stream through the upper-level node back to the source to the live streaming source station of the source business platform. Therefore, the popularity of the live stream is reused by the content delivery network to the greatest extent, realizing the live stream shared with the source business platform through the content delivery network, without producing live streams, reducing the time for pulling the live stream and improving the pulling efficiency.

In one embodiment, the upper-level node includes a first upper-level node at a level previous to the edge node. The step of pulling the target live stream from the upper-level node by sourcing back to the upper-level node based on the source business stream pull request includes: sending the source business stream pull request to the first upper-level node at the upper level, causing the first upper-level to search one or more local live streams of the first upper-level node for the target live stream based on the source business stream pull request; and receiving, in response to a presence of the target live stream in the one or more local live streams of the first upper-level node, the target live stream forwarded by the first upper-level node, where the target live stream is pulled from the live streaming source station by the first upper-level node reusing a back-to-source link of the target live stream.

The first upper-level node is a node at the level previous to the edge node and is an upper-level node of the content delivery network scheduling the edge node back to the source. In one embodiment, the first upper-level node may be the upper-level node that is closest to the edge node. For example, as shown in FIG. 1b, the first upper-level node for edge node 120a may be the upper -level node 130a that is closest in distance to edge node 120a.

After generating the source business stream pull request based on the source business domain name as well as the live stream name in the third-party business stream pull request, the edge node may source back to the closest first upper-level node based on the source business stream pull request. In some embodiments, the edge node sends the source business stream pull request to the first upper-level node. The first upper-level node, after receiving the source business stream pull request, searches the local live stream(s) of the first upper-level node for the target live stream based on the source business stream pull request, and when the target live stream exists in the local live stream(s) of the first upper-level node, the first upper-level node forwards the pulled target live stream to the edge node, and the edge node forwards the target live stream to the third-party business client. It is understood that the first upper-level node may reuse the back-to-source link of the target live stream to pull the target live stream from the live streaming source station, and then forward the pulled live stream to the edge node.

In the above embodiments, when there is no target live stream in the local live stream(s) of the edge node, the target live stream can be obtained by sourcing back to the upper node at the previous level, and the target live stream can be pulled from the local live stream(s) of the first upper-level node closest to the edge node to achieve that most of the back-to-source of the live stream is absorbed in the edge node and the upper-level node at the level previous to the edge node to reduce unnecessary sourcing and improve viewing quality while reduce the pressure on the source station.

The embodiments of the present disclosure are still illustrated with the source business platform being Kuaishou live streaming platform and the third-party business platform being Acfun, where the domain name of the source business platform (i.e., the source business domain name) is represented as domainB, and the domain name of the third-party business platform station Acfun (i.e., the third-party business domain name) is represented as domainA. Referring to FIG. 1b, a live stream "stream" exists in the live streaming source station of Kuaishou live streaming platform. For any user of Kuaishou live streaming platform who wants to watch the live stream "stream", the user can send a source business stream pull request to edge node 120a in the content delivery network through the client of Kuaishou platform of terminal 110a, and the edge node sources back to upper-level node 130a according to the source business stream pull request. Upper-level node 130a, after receiving the source business stream pull request, sources back to business source station 140 of Kuaishou platform according to the source business stream pull request to pull the live stream "stream". The source business stream pull request is: http://domainB/app/stream.flv?timestamp&signature.

In this case, when any user of the third-party business platform AcFun provided with a new live streaming business wants to watch the live stream "stream", the user may trigger a watch event for the live stream "stream" at the third-party business client of terminal 110b, causing the third-party business client to generate a third-party business stream pull request based on the source business domain name and the live stream name of the live streaming "stream", and to send the third-party business stream pull request to edge node 120c in the content delivery network, where the third-party business stream pull request is: http://domianA/app/stream.flv?timestamp&signature&shareHost=domainB. After receiving the request from the third-party business client, edge node 120c parses the parameters of the third-party business stream pull request and obtains the source business domain name and live stream name of the live stream "stream". Since edge node 120c has not pulled the live stream "steam" before, there is no live stream "stream" in edge node 120c. In this case, edge node 120c processes the third-party business stream pull request as a source business stream pull request based on the source business domain name and the live stream name of the live stream, and sends the source business stream pull request to upper-level node 130a at a previous level. Upper-level node 130a, after receiving the source business stream pull request, searches the local live stream(s) of upper-level node 130a for the live stream "stream" according to the source business stream pull request. Since upper-level node 130a has pulled the live stream "stream" from the business source station, i.e., the live stream "stream" exists in the local live stream(s) of upper-level node 130a, upper-level node 130a forwards the pulled live stream "stream" to edge node 120c, and edge node 120a forwards the live stream "stream" to the third-party business client.

In one embodiment, after the step of sending the source business stream pull request to the first upper-level node at the previous level, causing the first upper-level to search one or more local live streams of the first upper-level node for the target live stream based on the source business stream pull request, the method further includes: sourcing back through the first upper-level node to a second upper-level node of a same level as the first upper-level node in response to an absence of the target live stream in the one or more local live streams of the first upper-level node, causing the second upper-level node to search one or more local live streams of the second upper-level node for the target live stream based on the source business stream pull request; and obtaining, in response to a presence of the target live stream in the one or more local live streams of the second upper-level node, the target live stream pulled by the second upper-level node, where the target live stream is pulled by the second upper-level node reusing the back-to-source link of the target live stream from the live streaming source station of the source business platform or from the content delivery network.

The second upper-level node is a node at a level previous to the edge node, at the same level as the first upper-level node, and can be any upper-level node other than the first upper-level node of the content delivery network scheduling edge node back to the source.

After obtaining the source business stream pull request, the edge node sends the source business stream pull request to the first upper-level node. The first upper-level node, after receiving the source business stream pull request, searches the local live stream(s) of the first upper-level node for the target live stream according to the source business stream pull request. When the target live stream does not exist in the local live stream(s) of the first upper-level node, the first upper-level node sends the source business stream pull request to the second upper-level node of the same level. After receiving the source business stream pull request, the second upper-level node searches the local live stream(s) of the second upper-level node for the target live stream according to the source business stream pull request. When the target live stream exists in the local live stream(s) of the second upper-level node, the second upper-level node forwards the pulled target live stream to the first upper-level node. The first upper-level node forwards the received target live stream to the edge node, and the edge node forwards the target live stream to the third-party business client. It is understood that the second upper-level node may reuse the back-to-source link of the target live stream to pull the target live stream from the live streaming source station, and then forward the pulled live stream to the edge node.

In the above embodiments, when there is no target live stream in the local live stream(s) of the edge node, the target live stream can be obtained by sourcing back to the upper-level node at the level previous to the edge node, and when there is no target live stream in the local live stream(s) of the first upper-level node, the target live stream is pulled from the local live stream(s) of the second upper-level node by sending the source business stream pull request to the second upper-level node at the same level as the first upper-level node, in order to achieve that most of the back-to-source of the live stream is absorbed in the edge node and the upper-level node at the level previous to the edge node to reduce unnecessary sourcing and improve viewing quality while reduce the pressure on the source station.

The embodiments of the present disclosure are still illustrated with the source business platform being Kuaishou live streaming platform and the third-party business platform being AcFun, where the domain name of the source business platform (i.e., the source business domain name) is represented as domainB and the domain name of the third-party business platform AcFun (i.e., the third-party business domain name) is represented as domainA. Referring to FIG. 1b, a live stream "stream" exists in the live streaming source station of Kuaishou live streaming platform. For any user of Kuaishou live streaming platform who wants to watch the live stream "stream", the user can send a source business stream pull request to edge node 120a in the content delivery network through the client of Kuaishou platform of terminal 110a, and the edge node sources back to upper-level node 130a according to the source business stream pull request. Upper-level node 130a, after receiving the source business stream pull request, sources back to business source station 140 of Kuaishou platform according to the source business stream pull request to pull the live stream "stream". The source business stream pull request is: http://domainB/app/stream.flv?timestamp&signature.

In this case, when any user of the third-party business platform AcFun provided with a new live streaming business wants to watch the live stream "stream", the user may trigger a watch event for the live stream "stream" at the third-party business client of terminal 110b, causing the third-party business client to generate a third-party business stream pull request based on the source business domain name and the live stream name of the live streaming "stream", and to send the third-party business stream pull request to edge node 120c in the content delivery network, where the third-party business stream pull request is: http://domianA/app/stream.flv?timestamp&signature&shareHost=domainB. After receiving the request from the third-party business client, edge node 120c parses the parameters of the third-party business stream pull request and obtains the source business domain name and live stream name of the live stream "stream". Since edge node 120c has not pulled the live stream "steam" before, there is no live stream "stream" in edge node 120c. In this case, edge node 120c processes the third-party business stream pull request as a source business stream pull request based on the source business domain name and the live stream name of the live stream "stream", and sends the source business stream pull request to upper-level node 130b at a previous level. Upper-level node 130b, after receiving the source business stream pull request, searches the local live stream(s) of upper-level node 130b for the live stream "stream" according to the source business stream pull request. Since upper-level node 130b has not pulled the live stream "steam" before, there is no live stream in upper-level node 130b, and upper-level node 130b sends the source business stream pull request to upper-level node 130a of the same level. After receiving the source business stream pull request, upper-level node 130a searches the local live stream(s) of upper-level node 130a for the live stream "stream" according to the source business stream pull request. Since upper-level node 130a has pulled the live stream from the business source station, that is, the live stream "stream" exists in the local live stream(s) of upper-level node 130a, upper-level node 130a forwards the pulled live stream "stream" to upper-level node 130b, and upper-level node 130b forwards the live stream "stream" to edge node 120c, which in turn forwards the live stream "stream" to the third-party business client.

In one embodiment, after the step of pulling the target live stream from the upper-level node by sourcing back to the upper-level node based on the source business stream pull request, the method further includes: pulling, in response to an absence of the target live stream in the one or more local live streams of the second upper-level node, the target live stream through the first upper-level node from a live streaming source station or a source node of the content delivery network by sourcing back to the live streaming source station or the source node in a level-by-level mode based on the source business stream pull request.

The live streaming source station is the business self-built source station of the source business platform. Taking the source business platform as Kuaishou live streaming platform for example, the live streaming source station is the live streaming source station in Kuaishou live streaming platform. The source node of the content delivery network refers to the source station in the content delivery network that saves the live streaming source.

After obtaining the source business stream pull request, the edge node sends the source business stream pull request to the first upper-level node. The first upper-level node, after receiving the source business stream pull request, searches the local live stream(s) of the first upper-level node for the target live stream according to the source business stream pull request. When the target live stream does not exist in the local live stream(s) of the first upper-level node, the first upper-level node sends the source business stream pull request to the second upper-level of the same level. The second upper-level node, after receiving the source business stream pull request, searches the local live stream(s) of the second upper-level node for the target live stream according to the source business stream pull request. When the target live stream does not exist in the local live stream(s) of the second upper-level node, the first upper-level node sources back to the live stream station of the source business platform or the source node of the content delivery network level by level according to the source business stream pull request, and pulls the target live stream from the live streaming source station or the source node. After the first upper-level node pulls the target live stream, the first upper-level node forwards the target live stream to the edge node, and the edge node forwards the target live stream to the third-party business client.

In should be understood that, the decision of whether to source back to the live streaming source station of the source business platform or to the source node of the content delivery network is based on the scheduling results of the content delivery network.

In the above embodiments, when the edge node and the upper-level node(s) in the content delivery network have not pulled the target live stream, there is no target live stream in the local live stream(s) of the edge node and the upper-level node(s). In this case, the edge node can process the third-party business stream pull request as the source business stream pull request, so as to source back to the live streaming source station of the source business platform or the source node of the content delivery network level by level according to the source business stream pull request, and to pull the live stream from the live streaming source station or the source node, without saving the live stream produced by the source business platform to the source station of the third-party business platform, thereby sharing the live stream with the source business platform through the content delivery network, without producing the live stream, reducing the time for pulling the live stream and improving the pulling stream efficiency.

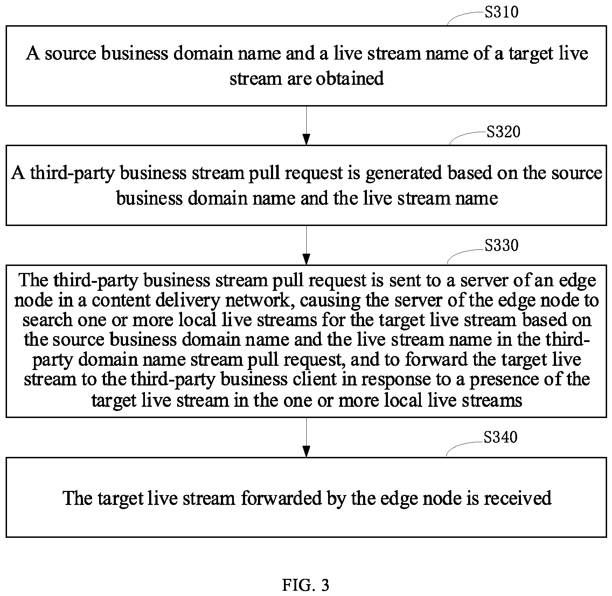

FIG. 3 is a flowchart of a method for pulling a live stream illustrated according to an exemplary embodiment. The method for pulling the live stream, as shown in FIG. 3, is applied to a third-party business client, and includes the following steps.

In step S310, a source business domain name and a live stream name of a target live stream are obtained.

The source business domain name is the domain name of the source business platform that produces the target live stream. The live stream name is the only unique identifier of the live stream. A third-party business client is installed on the terminal, and the user selects the live stream to be watched by operating on the third-party business client. The third-party business client, after receiving the operation information of the user, obtains the source business domain name and the live stream name of the target live stream based on the user's selection.

In step S320, a third-party business stream pull request is generated based on the source business domain name and the live stream name.

The third-party business client, after obtaining the source business domain name and the live stream name of the target live stream, generates a third-party business stream pull request based on the source business domain name and the live stream name.

In one embodiment, the third-party business stream pull request includes a third-party business domain name, an agreed path, a live stream name, authentication information, and a source business domain name. The third-party business domain name is the domain name where the third-party platform for the new live streaming business is located. The agreed path is a static identifier agreed between the business party and the CDN vendor. In some embodiments, the third-party business stream pull request may be specified as: http://third-party business domain name/agreed path/{live stream name}?{authentication information}&shareHost = {source business domain name} .

In step S330, the third-party business stream pull request is sent to an edge node in a content delivery network, causing the server of the edge node to search one or more local live streams for the target live stream based on the source business domain name and the live stream name in the third-party business stream pull request, and to forward the target live stream in the one or more local live streams to the third-party business client in response to a presence of the target live stream in the one or more local live streams.

The third-party business client sends the third-party business stream pull request to the edge node in the content delivery network, and the edge node, after receiving the third-party business stream pull request, obtains the source business domain name and the live stream name in the third-party business pull stream request, and searches the local live stream(s) of the edge node for the live stream with the same live stream name as the target live stream under the source business domain name. When the edge node found the live stream with the same source business domain name and the same live stream name as the target live stream from the local live stream(s), the edge node forwards the target live stream to the third-party business client.

In step S340, the target live stream forwarded by the edge node is received.

The third-party business client receives the target live stream forwarded by the edge node and will play the live stream through the display device, enabling the user to watch the live stream through the third-party business terminal.

In the above method for pulling the live stream, the source business domain name and the live stream name of the target live stream are obtained; the third-party business stream pull request is generated based on the source business domain name and the live stream name; the third-party business stream pull request is sent to the edge node in the content delivery network, causing the edge node to search the local live stream(s) for the target live stream based on the source business domain name and the live stream name in the third-party domain name stream pull request, and to forward the pulled target live stream to the third-party business client in response to a presence of the target live stream in the local live stream(s); the target live stream forwarded by the edge node is received, realizing the corresponding client of the third-party business platform to play the live stream, and supporting the rapid incubation of the new live streaming business. The third-party business platform does not need to produce the live stream, and directly reuses the live stream of the existing source business platform to speed up the time for pulling the live stream.

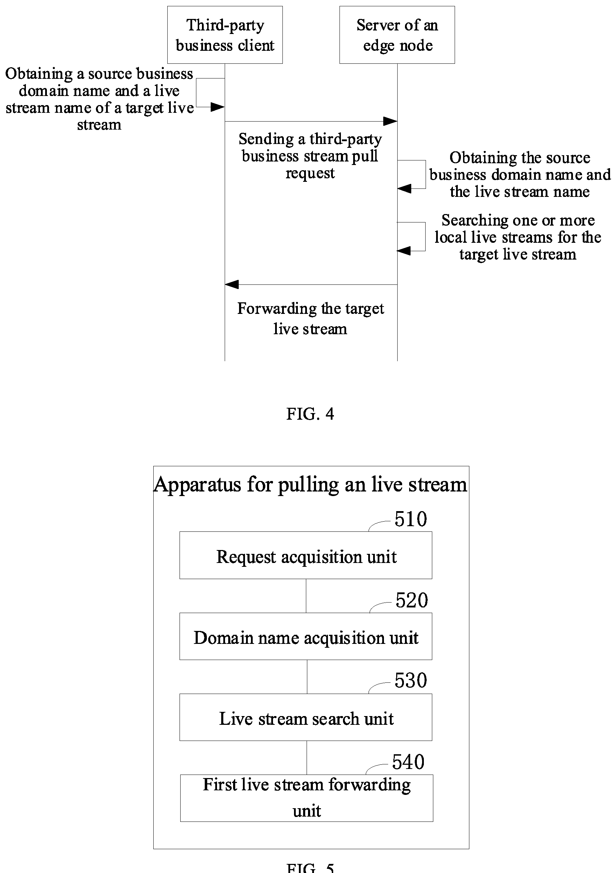

FIG. 4 is a timing diagram of a method of pulling a live stream illustrated according to an exemplary embodiment. As shown in FIG. 4, the method for pulling the live stream includes the following steps.

The third-party business client obtains the source business domain name and the live stream name of the target live stream.

The third-party business client generates the third-party business stream pull request based on the source business domain name and the live stream name.

The third-party business client sends the third-party business stream pull request to the edge node in the content delivery network.

The edge node receives the third-party business stream pull request for the target live stream from the third-party business client.

The edge node determines the source business domain name and the live stream name of the target live stream based on the third-party business stream pull request.

The edge node searches the local live stream(s) for the target live stream based on the source business domain name and the live stream name.

When the target live stream exists in the local live stream(s), the edge node forwards the target live stream in the local live stream(s) to the third-party business client.

The third-party business client receives the target live stream forwarded by the edge node.

The above method for pulling the live stream can realize the live stream played by the corresponding client of the third-party business platform, supporting the rapid incubation of new business of live streaming. The third-party business platform does not need to produce the live stream, and directly reuses the live stream of the existing source business platform to speed up the time for pulling the live stream.

It should be understood that although the above steps in the flowchart are shown in the order indicated by the arrows, the steps are not necessarily executed in the order indicated by the arrows. Except as expressly stated herein, there is no strict order in which these steps may be performed, and these steps may be performed in other orders. Moreover, at least some of the above steps in the flowchart may include multiple steps or multiple stages, which are not necessarily executed at the same time, but may be executed at different times, and the order in which these steps or stages are executed is not necessarily sequential, but may be executed alternately or alternately with other steps or at least some of the steps or stages in other steps.

FIG. 5 is a block diagram of an apparatus for pulling a live stream illustrated according to an exemplary embodiment. Referring to FIG. 5, the apparatus includes a request acquisition unit 510, a domain name acquisition unit 520, a live stream search unit 530, a first live stream forwarding unit 540, and a conversion module 550.

The request acquisition unit 510 is configured to receive a third-party business stream request for a target live stream from a third-party business client.

The domain name acquisition unit 520 is configured to determine a source business domain name and a live stream name of the target live stream based on the third-party business stream pull request.

The live stream search unit 530 is configured to search one or more local live streams for the target live stream based on the source business domain name and the live stream name.

The first live stream forwarding unit 540 is configured to forward, in response to a presence of the target live stream in the one or more local live streams, the target live stream in the one or more local live streams to the third-party business client.

In one embodiment, the apparatus for pulling the live stream further includes: a request generation unit configured to generate, in response to an absence of the target live stream in the one or more local live streams, a source business stream pull request based on the source business domain name and the live stream name; a request back-to-source unit configured to pull the target live stream from an upper-level node of the first node by sourcing back to the upper-level node based on the source business stream pull request, causing the upper-level node to forward the target live stream; and a second live stream forwarding unit configured to receive the target live stream forwarded by the upper-level node and forward the target live stream to the third-party business client.

In one embodiment, the upper-level node includes a first upper-level node at a level previous to the first node. The request back-to-source unit is configured to: send the source business stream pull request to the first upper-level node at the level previous to the first node, causing the first upper-level to search one or more local live streams of the first upper-level node for the target live stream based on the source business stream pull request; and receive, in response to a presence of the target live stream in the one or more local live streams of the first upper-level node, the target live stream forwarded by the first upper-level node, where the target live stream is pulled by the first upper-level node reusing a back-to-source link of the target live stream.

In one embodiment, the request back-to-source unit is configured to: send, in response to an absence of the target live stream in the one or more local live streams of the first upper-level node, the source business stream pull request through the first upper-level node to a second upper-level node of a same level as the first upper-level node, causing the second upper-level node to search one or more local live streams of the second upper-level node for the target live stream based on the source business stream pull request; and obtain, in response to a presence of the target live stream in the one or more local live streams of the second upper-level node, the target live stream pulled by the second upper-level node, wherein the target live stream is pulled by the second upper-level node reusing the back-to-source link of the target live stream.

In one embodiment, the request back-to-source unit is configured to: pull, in response to an absence of the target live stream in the one or more local live streams of the second upper-level node, the target live stream from a live streaming source station or a source node of the content delivery network by sourcing back to the live streaming source station or the source node in a level-by-level mode based on the source business stream pull request.

In one embodiment, the third-party business stream pull request includes a third-party business domain name, the live stream name, and the source business domain name.

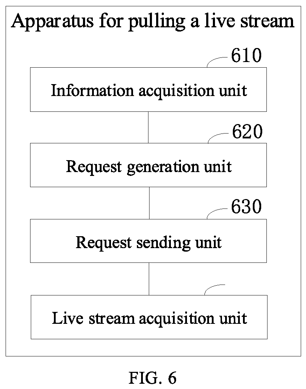

FIG. 6 is a block diagram of an apparatus for pulling a live stream illustrated according to an exemplary embodiment. Referring to FIG. 6, the apparatus includes an information acquisition unit 610, a request generation unit 620, a request sending unit 630, and a live stream acquisition unit 640.

The information acquisition unit 610 is configured to obtain a source business domain name and a live stream name of a target live stream.

The request generation unit 620 is configured to generate a third-party business stream pull request based on the source business domain name and the live stream name.

The request sending unit 630 is configured to send the third-party business stream pull request to a first node in a content delivery network, causing the first node to search one or more local live streams for the target live stream based on the source business domain name and the live stream name in the third-party domain name pull request, and to forward the target live stream in the one or more local live streams to the third-party business client in response to a presence of the target live stream in the one or more local live streams.

The live stream acquisition unit 640 is configured to receive the target live stream forwarded by the first node.

Regarding the apparatuses in the above embodiments, the specific way in which each module performs its operation has been described in detail in the embodiments concerning the method, and will not be described in detail here.

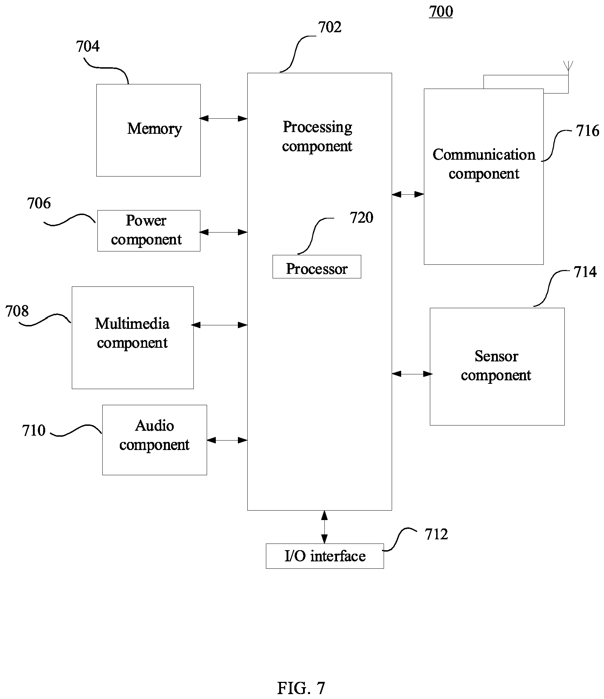

FIG. 7 is a block diagram of an electronic device 700 for pulling a live stream illustrated according an exemplary embodiment. For example, the device 700 may be a third-party business client, specifically, but not limited to, one of a cell phone, a computer, a digital broadcast terminal, a message sending and receiving device, a gaming console, a tablet device, a fitness device, a personal digital assistant, and the like.

Referring to FIG. 7, the device 700 may include one or more of the following components: a processing component 702, a memory 704, a power component 706, a multimedia component 708, an audio component 710, an input/output (I/O) interface 712, a sensor component 714, and a communication component 716.

The processing component 702 generally controls the overall operation of the device 700, such as operations associated with display, phone calls, data communications, camera operations, and recording operations. The processing component 702 may include one or more processors 720 to execute instructions to perform all or some of the steps of the methods described above. Further, the processing component 702 may include one or more modules to facilitate interaction between the processing component 702 and other components. For example, the processing component 702 may include a multimedia module to facilitate interaction between the multimedia component 708 and the processing component 502.

The memory 704 is configured to store various types of data to support operation at device 700. Examples of such data include instructions, contact data, phonebook data, messages, pictures, videos, and the like, for any application or method operating on the device 700. The memory 704 may be implemented by any type of volatile or non-volatile storage device or combination thereof, such as a static random access memory (SRAM), an electrically erasable programmable read only memory (EEPROM), an erasable programmable read only memory (EPROM), a programmable read only memory (PROM), a read only memory (ROM), a magnetic memory, a flash memory, a magnetic disk, or an optical disk.

The power component 706 provides power to the various components of the device 700. The power component 706 may include a power management system, one or more power supplies, and other components associated with generating, managing, and distributing power to the device 700.

The multimedia component 708 includes a screen that provides an output interface between the device 700 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, swipe, and gestures on the touch panel. The touch sensor may not only sense the boundaries of a touch or swipe action, but also detect the duration and pressure associated with the touch or swipe action. In some embodiments, the multimedia component 708 includes a front-facing camera and/or a rear-facing camera. In response to the device 700 being in an operating mode, such as a shooting mode or a video mode, the front camera and/or the rear camera may receive external multimedia data. Each of the front and rear cameras may be a fixed optical lens system or have focal length and optical zoom capability.

The audio component 710 is configured to output and/or input audio signals. For example, the audio component 710 includes a microphone (MIC) that is configured to receive external audio signals in response to the device 700 being in an operating mode, such as a call mode, a recording mode, and a voice recognition mode. The received audio signals may be further stored in the memory 704 or transmitted via the communication component 716. In some embodiments, the audio component 710 also includes a speaker for outputting the audio signals.

The I/O interface 712 provides an interface between the processing component 702 and a peripheral interface module, and the above peripheral interface module may be keyboards, click wheels, buttons, or the like. These buttons may include, but are not limited to: home buttons, volume buttons, start buttons, and lock buttons.

The sensor component 714 includes one or more sensors for providing status assessment of various aspects of the device 700. For example, the sensor component 714 may detect the on/off state of the device 700, the relative positioning of components (for example, the components are the displayer and keypad of the device 700), and the sensor component 714 may also detect a change in the position of the device 700 or a component of the device 700, the presence or absence of the contact of the user with the device 700, the orientation or acceleration/deceleration of the device 700, and the temperature change of the device 700. The sensor component 714 may include a proximity sensor configured to detect the presence of a nearby object in response to the absence of any physical contact. The sensor component 714 may also include a light sensor, such as a CMOS or CCD image sensor, for use in imaging applications. In some embodiments, the sensor component 714 may also include an acceleration sensor, a gyroscope sensor, a magnetic sensor, a pressure sensor, or a temperature sensor.

The communication component 716 is configured to facilitate wired or wireless communication between the device 700 and other devices. The device 700 may access wireless networks based on communication standards, such as WiFi, carrier networks (for example, 2G, 3G, 4G, or 5G), or a combination thereof. In one exemplary embodiment, the communication component 716 receives broadcast signals or broadcast related information from an external broadcast management system via a broadcast channel. In some embodiments, the communication component 716 also includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In some embodiments, the device 700 may be implemented by one or more application specific integrated circuits (ASICs), digital signal processors (DSPs), digital signal processing devices (DSPDs), programmable logic devices (PLDs), field Programmable gate arrays (FPGAs), controllers, microcontrollers, microprocessors or other electronic components for performing the above method.

In some embodiments, a non-transitory storage medium including instructions, such as a memory 704 including instructions, is also provided, and the instructions are executable by the processor 720 of the device 700 to perform the method described above. For example, the non-transitory computer-readable storage medium may be a ROM, a random access memory (RAM), a CD-ROM, a magnetic tape, a floppy disk, an optical disk data storage device, or the like.

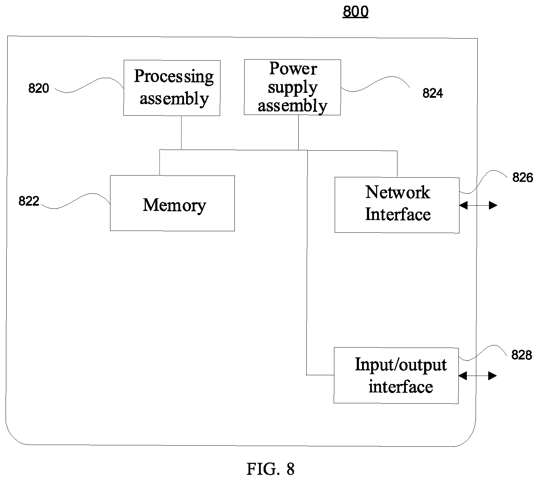

FIG. 8 is a block diagram of an electronic device 800 for pulling a live stream illustrated according to an exemplary embodiment. For example, the electronic device 800 may be provided as a server of an edge node. Referring to FIG. 8, the device 800 includes a processing assembly 820, which further includes one or more processors, and a memory resource, represented by a memory 822, configured to store instructions executable by the processing assembly 820, such as applications. The applications stored in the memory 822 may include one or more modules, each of the modules corresponding to a set of instructions. Further, the processing assembly 820 is configured to execute instructions to perform the above method for pulling the live stream.

The electronic device 800 may further include: a power supply assembly 824 configured to perform power management of the device 800; a wired or wireless network interface 826 configured to connect the device 800 to a network; and an input/output (I/O) interface 828. The electronic device 800 may operate based on an operating system stored in the memory 822, for example, Windows Server^{™}, Mac OS X^{™}, Unix^{™}, Linux^{™}, FreeBSD^{™}, and the like.

In exemplary embodiments, there is also provided a storage medium including instructions, such as a memory 822 including instructions, the instructions being executable by a processor of an electronic device to accomplish the method described above. The storage medium may be a non-transitory computer readable storage medium, for example, the non-transitory computer readable storage medium may be ROM, random access memory (RAM), CD-ROM, magnetic tape, floppy disk, and optical data storage device, among others.

Other embodiments of the present disclosure will readily come to the mind of one skilled in the art upon consideration of the specification and practice of the embodiments disclosed herein. This application is intended to cover any variation, use, or adaptation of the present disclosure that follows the general principles of the present disclosure and includes commonly known or customary technical means in the art that are not disclosed herein. The specification and embodiments are to be considered exemplary only, and the true scope and spirit of the present disclosure is indicated by the following claims.

It should be understood that the present disclosure is not limited to the precise construction already described above and illustrated in the accompanying drawings, and that various modifications and changes may be made without departing from its scope. The scope of the present disclosure is limited only by the appended claims.

## Claims

1. A method for pulling a live stream, applied to a content delivery network, comprising:
receiving a third-party business stream pull request for a target live stream from a third-party business client;
determining a source business domain name and a live stream name of the target live stream based on the third-party business stream pull request;
searching one or more local live streams for the target live stream based on the source business domain name and the live stream name, wherein the one or more local live streams are at a first node of the content delivery network; and
forwarding, in response to a presence of the target live stream in the one or more local live streams, the target live stream in the one or more local live streams to the third-party business client.

2. The method of claim 1, wherein said searching for the target live stream comprises:
generating, in response to an absence of the target live stream in the one or more local live streams, a source business stream pull request based on the source business domain name and the live stream name;
pulling the target live stream from an upper-level node of the first node by sourcing back to the upper-level node based on the source business stream pull request, causing the upper-level node to forward the target live stream; and
receiving the target live stream forwarded by the upper-level node and forwarding the target live stream to the third-party business client.

3. The method of claim 2, wherein the upper-level node comprises a first upper-level node at a level previous to the first node, and said pulling the target live stream from the upper-level node by sourcing back to the upper-level node based on the source business stream pull request, comprises:
sending the source business stream pull request to the first upper-level node, causing the first upper-level to search one or more local live streams of the first upper-level node for the target live stream based on the source business stream pull request; and
receiving, in response to a presence of the target live stream in the one or more local live streams of the first upper-level node, the target live stream forwarded by the first upper-level node, wherein the target live stream is pulled by the first upper-level node reusing a back-to-source link of the target live stream.

4. The method of claim 3, further comprising:
sending, in response to an absence of the target live stream in the one or more local live streams of the first upper-level node, the source business stream pull request through the first upper-level node to a second upper-level node of a same level as the first upper-level node, causing the second upper-level node to search one or more local live streams of the second upper-level node for the target live stream based on the source business stream pull request; and
obtaining, in response to a presence of the target live stream in the one or more local live streams of the second upper-level node, the target live stream pulled by the second upper-level node through the first upper-level node, wherein the target live stream is pulled by the second upper-level node reusing the back-to-source link of the target live stream.

5. The method of claim 4, further comprising:
pulling, in response to an absence of the target live stream in the one or more local live streams of the second upper-level node, the target live stream from a live streaming source station or a source node of the content delivery network by sourcing back to the live streaming source station or the source node in a level-by-level mode based on the source business stream pull request.

6. The method of claim 1, wherein the third-party business stream pull request comprises a third-party business domain name, the live stream name, and the source business domain name.

7. A method for pulling a live stream, applied to a third-party business client, comprising:
obtaining a source business domain name and a live stream name of a target live stream;
generating a third-party business stream pull request based on the source business domain name and the live stream name;
sending the third-party business stream pull request to a first node in a content delivery network, causing the first node to search one or more local live streams for the target live stream based on the source business domain name and the live stream name in the third-party business stream pull request, and to forward the target live stream in the one or more local live streams to the third-party business client in response to a presence of the target live stream in the one or more local live streams; and
receiving the target live stream forwarded by the first node.

8. An apparatus for pulling a live stream, applied to a content delivery network, comprising:
a request acquisition unit configured to receive a third-party business stream request for a target live stream from a third-party business client;
a domain name acquisition unit configured to determine a source business domain name and a live stream name of the target live stream based on the third-party business stream pull request;
a live stream search unit configured to search one or more local live streams for the target live stream based on the source business domain name and the live stream name, wherein the one or more local live streams are at a first node of the content delivery network; and
a first live stream forwarding unit configured to forward, in response to a presence of the target live stream in the one or more local live streams, the target live stream in the one or more local live streams to the third-party business client.

9. The apparatus of claim 8, further comprising:
a request generation unit configured to generate, in response to an absence of the target live stream in the one or more local live streams, a source business stream pull request based on the source business domain name and the live stream name;
a request back-to-source unit configured to pull the target live stream from an upper-level node of the first node by sourcing back to the upper-level node based on the source business stream pull request, causing the upper-level node to forward the target live stream; and
a second live stream forwarding unit configured to receive the target live stream forwarded by the upper-level node and forward the target live stream to the third-party business client.

10. The apparatus of claim 9, wherein the upper-level node comprises a first upper-level node at a level previous to the first node; and
the request back-to-source unit is configured to:
send the source business stream pull request to the first upper-level node at the level previous to the first node, causing the first upper-level to search one or more local live streams of the first upper-level node for the target live stream based on the source business stream pull request; and
receive, in response to a presence of the target live stream in the one or more local live streams of the first upper-level node, the target live stream forwarded by the first upper-level node, wherein the target live stream is pulled by the first upper-level node reusing a back-to-source link of the target live stream.

11. The apparatus of claim 10, wherein the request back-to-source unit is configured to:
send, in response to an absence of the target live stream in the one or more local live streams of the first upper-level node, the source business stream pull request through the first upper-level node to a second upper-level node of a same level as the first upper-level node, causing the second upper-level node to search one or more local live streams of the second upper-level node for the target live stream based on the source business stream pull request; and
obtain, in response to a presence of the target live stream in the one or more local live streams of the second upper-level node, the target live stream pulled by the second upper-level node, wherein the target live stream is pulled by the second upper-level node reusing the back-to-source link of the target live stream.

12. The apparatus of claim 11, wherein the request back-to-source unit is configured to:
pull, in response to an absence of the target live stream in the one or more local live streams of the second upper-level node, the target live stream from a live streaming source station or a source node of the content delivery network by sourcing back to the live streaming source station or the source node in a level-by-level mode based on the source business stream pull request.

13. The apparatus of claim 8, wherein the third-party business stream pull request comprises a third-party business domain name, the live stream name, and the source business domain name.

14. An apparatus for pulling a live stream, applied to a third-party business client, comprising:
an information acquisition unit configured to obtain a source business domain name and a live stream name of a target live stream;
a request generation unit configured to generate a third-party business stream pull request based on the source business domain name and the live stream name; and
a request sending unit configured to send the third-party business stream pull request to a first node in a content delivery network, causing the first node to search one or more local live streams for the target live stream based on the source business domain name and the live stream name in the third-party domain name pull request, and to forward the target live stream in the one or more local live streams to the third-party business client in response to a presence of the target live stream in the one or more local live streams; and
a live stream acquisition unit configured to receive the target live stream forwarded by the first node.

15. An electronic device, comprising:
a processor; and
a memory storing instructions executable by the processor;
wherein the processor is configured to execute the instructions to implement following steps:
receiving a third-party business stream pull request for a target live stream from a third-party business client;
determining a source business domain name and a live stream name of the target live stream based on the third-party business stream pull request;
searching one or more local live streams for the target live stream based on the source business domain name and the live stream name, wherein the one or more local live streams are at a first node of the content delivery network; and
forwarding, in response to a presence of the target live stream in the one or more local live streams, the target live stream in the one or more local live streams to the third-party business client.

16. The electronic device of claim 15, wherein said searching for the target live stream further comprises:
generating, in response to an absence of the target live stream in the one or more local live streams, a source business stream pull request based on the source business domain name and the live stream name;
pulling the target live stream from an upper-level node of the first node by sourcing back to the upper-level node based on the source business stream pull request, causing the upper-level node to forward the target live stream; and
receiving the target live stream forwarded by the upper-level node and forwarding the target live stream to the third-party business client.

17. The electronic device of claim 16, wherein the upper-level node comprises a first upper-level node at a level previous to the first node, and said pulling the target live stream from the upper-level node by sourcing back to the upper-level node based on the source business stream pull request, comprises:
sending the source business stream pull request to the first upper-level node, causing the first upper-level to search one or more local live streams of the first upper-level node for the target live stream based on the source business stream pull request; and
receiving, in response to a presence of the target live stream in the one or more local live streams of the first upper-level node, the target live stream forwarded by the first upper-level node, wherein the target live stream is pulled by the first upper-level node reusing a back-to-source link of the target live stream.

18. The electronic device of claim 17, wherein the processor is configured to execute the instructions to:
send, in response to an absence of the target live stream in the one or more local live streams of the first upper-level node, the source business stream pull request through the first upper-level node to a second upper-level node of a same level as the first upper-level node, causing the second upper-level node to search one or more local live streams of the second upper-level node for the target live stream based on the source business stream pull request; and
obtain, in response to a presence of the target live stream in the one or more local live streams of the second upper-level node, the target live stream pulled by the second upper-level node through the first upper-level node, wherein the target live stream is pulled by the second upper-level node reusing the back-to-source link of the target live stream.

19. The electronic device of claim 18, wherein the processor is configured to execute the instructions to:
pull, in response to an absence of the target live stream in the one or more local live streams of the second upper-level node, the target live stream from a live streaming source station or a source node of the content delivery network by sourcing back to the live streaming source station or the source node in a level-by-level mode based on the source business stream pull request.

20. The electronic device of claim 15, wherein the third-party business stream pull request comprises a third-party business domain name, the live stream name, and the source business domain name.

21. An electronic device, comprising:
a processor; and
a memory storing instructions executable by the processor;
wherein the processor is configured to execute instructions to implement following steps:
obtaining a source business domain name and a live stream name of a target live stream;
generating a third-party business stream pull request based on the source business domain name and the live stream name;
sending the third-party business stream pull request to a first node in a content delivery network, causing the first node to search one or more local live streams for the target live stream based on the source business domain name and the live stream name in the third-party business stream pull request, and to forward the target live stream in the one or more local live streams to the third-party business client in response to a presence of the target live stream in the one or more local live streams; and
receiving the target live stream forwarded by the first node.

22. A storage medium, wherein instructions in the storage medium, when executed by a processor of an electronic device, cause the electronic device to perform following steps:
receiving a third-party business stream pull request for a target live stream from a third-party business client;
determining a source business domain name and a live stream name of the target live stream based on the third-party business stream pull request;
searching one or more local live streams for the target live stream based on the source business domain name and the live stream name, wherein the one or more local live streams are at a first node of the content delivery network; and
forwarding, in response to a presence of the target live stream in the one or more local live streams, the target live stream in the one or more local live streams to the third-party business client.

23. A storage medium, wherein instructions in the storage medium, when executed by a processor of an electronic device, cause the electronic device to perform following steps:
obtaining a source business domain name and a live stream name of a target live stream;
generating a third-party business stream pull request based on the source business domain name and the live stream name;
sending the third-party business stream pull request to a first node in a content delivery network, causing the first node to search one or more local live streams for the target live stream based on the source business domain name and the live stream name in the third-party business stream pull request, and to forward the target live stream in the one or more local live streams to the third-party business client in response to a presence of the target live stream in the one or more local live streams; and
receiving the target live stream forwarded by the first node.
